# EUROPEAN PATENT APPLICATION

(11) **EP 4 818 088 A1**
(43) Date of publication of application: **07.10.2026**
(21) Application number: 25168412.2
(22) Date of filing: 04.04.2025
(51) Int. Cl.: B65G 54/02, H02K 5/22

(54) **TRACK MODULE, ELECTRICAL CONNECTOR AND TRACK SYSTEM FOR A LINEAR MOTOR CONVEYING SYSTEM, LINEAR MOTOR CONVEYING SYSTEM AND CORRESPONDING METHOD**

(71) Applicant: Robert Bosch GmbH, 70442 Stuttgart (DE)
(72) Inventor: van der Woude, Lars, 5644 EA Eindhoven (NL); Tielen, Niels, 4871 LM Etten-Leur (NL); Geelkerken, Nicolaas Gerardus, 2811 CE Reeuwijk (NL); Kunkelmann, Stefan, 63897 Miltenberg (DE); Gross, Martin, 97775 Burgsinn (DE)

(57) **Abstract**

The invention relates to track module (301) for a linear motor conveying system, wherein the track module comprises a track component (310), a conveying path for a carrier module (350) to be received in the track module, and a bottom part (313), wherein the track module has two ends (315.1, 315.2) and the conveying path (P) extends between the two ends, wherein the bottom part (313) comprises a bottom side (313.1) and a top side (313.2), which opposes the bottom side, wherein the track module comprises, at one or at each of the two ends, a track-sided electrical interface (322) of a plug-and-socket connection type, provided in the bottom part at the bottom side, wherein the track-sided electrical interface (322) is configured to be connected with a connector-sided electrical interface of an electrical connector along a plugging direction, wherein the plugging direction is at least essentially oriented from the bottom side to the top side or vice versa. The invention also relates to an electrical connector.

## Description

The present invention relates to a track module for a linear motor conveying system, to an electrical connector for a linear motor conveying system, to a track system comprising multiple track modules and at least one electrical connector. The invention also relates to such linear motor conveying system and to a method for setting up a track system.

### Background of the invention

Linear conveying systems like linear motor conveying systems can be used in different applications, e.g., industrial applications. For example, linear motor conveying systems can be used in the field of high-speed conveyance solutions for in-machine and inter-machine transportation. Such solutions can be inverted linear motor systems, which can control small workpiece carriers accurately and with high dynamics. The carriers themselves can be passive. Conveying systems are known from EP 2 884 639 B1, US 11 190 086 B2, US 2022/131438 A1, US 11 312 583 B2 and US 10 759 607 B2.

### Disclosure of the invention

According to the invention a track module, an electrical connector, a track system, a linear motor conveying system, and a corresponding method with the features of the independent claims are proposed. Advantageous embodiments are subject-matter of dependent claims and of the following description.

The invention relates to linear motor conveying systems and in particular the track modules used therein. Multiple track modules form a track system, and the linear motor conveying system comprises the track system and one or more carriers to be guided in the track system. The track modules can be standardized modules, multiple of these modules are to be connected to each other to form the track system. A track module, for example, has or defines at least one conveying path, i.e., a path along which the carrier modules are to be guided and moved. Such track modules can be of different types, e.g., straight modules, curve modules, and switch modules. Such different modules in required numbers can be connected to form a track system according to specific needs. While straight modules and curve modules typically have one conveying path, a switch module can have one conveying path split into two conveying paths.

A track module comprises a track component, a conveying path for a carrier module to be received in the respective track module, and a bottom part. The track module has two ends and the respective conveying path extends between these two ends, i.e. from a first one to a second one of said two ends. The track component can comprise, along at least part of the conveying path, a first side part, a second side part and the bottom part, wherein the first side part and the second side part are arranged opposite to each other. Such track module is configured to receive the carrier module between the first side part and the second side part. In cross section, this can form a U-shape or a similar shape/cross section. The bottom part preferably is configured to be mounted on a base plate, where the base plate can be mounted on a ground surface or in a different orientation, e.g., vertically or upside-down.

The track modules can also comprise guiding structures, preferably rods, each configured to act as a bearing surface for a wheel of the carrier module. Such guiding structure might also be called a support structure. One, two or three or even more of the guiding structures can arranged at each of the first side part and/or the second side part. In an embodiment, three guiding structures are provided at the first side part and at the second side part, i.e., six guiding structures in total. These guiding structures or rods can be used to guide the carrier modules. The track component can comprise recesses, in which said guiding structures or rods can be assembled.

The guiding structures can be configured with a free hanging end such that, at each of the two ends, the respective free hanging end is not in contact with the track component. A main part of the guiding structures can basically be provided in the recesses of the track component. The free hanging ends can extend beyond the respective track component, along the conveying path.

As mentioned, the track system comprises multiple track modules. These are arranged such that a desired conveying path over the multiple track modules is formed. The track modules are arranged next to each other or adjacent to each other; thus, there are one or multiple sets of two adjacent of the multiple track modules, which are arranged next to each other along the conveying path. The free hanging ends arranged adjacent to each other can mechanically be connected to each other by means of connectors or rod connectors.

The present invention in particular relates to the electrical and communicative connections between track modules, specifically between two adjacent track modules. Electrical connectors with electrical interfaces are proposed, which interact with electrical interfaces at the track modules. Such electrical connectors can provide electrical and communicative connection.

In an embodiment, the bottom part of the track module comprises a bottom side and a top side, which opposes the bottom side. The bottom side is in particular the side of the bottom part which will be mounted to the base plate. The track module comprises, at one or at each of the two ends, a track-sided electrical interface of a plug-and-socket connection type, which is provided in the bottom part at the bottom side. The track-sided electrical interface is configured to be connected with a connector-sided electrical interface of an electrical connector along a plugging direction. The plugging direction is, at least essentially, oriented from the bottom side to the top side or vice versa; the plugging direction is the main direction in which the track-sided electrical interface and the connector-sided electrical interface are physically connected to each other. For example, the connector-sided electrical interface can be plugged into the track-sided electrical interface by moving the electrical connector along the plugging direction. This plugging direction is, thus, perpendicular to the conveying path (at least at the respective end). The plugging direction is, thus, also perpendicular to a surface of the base plate. In particular, a track-sided electrical interface is provided at each of the two ends. In this case, the two track-sided electrical interfaces (at a first and a second end) have an appropriate electrical connection inside the track module. This track-sided electrical interface allows an easy electrical connection with another track module, via an electrical connector.

In an embodiment, the track-sided electrical interface is provided in a recess in the bottom part at the bottom side. In this way, the respective connector-sided electrical interface can be put into that recess so as to allow a smooth positioning of track module and electrical connector at a base plate.

In an embodiment, the track-sided electrical interface comprises contact pins and/or contact plugs and/or contact sockets, which are configured such that a relative movement between the track module and the electrical connector, along the conveying direction, is allowed, when the track-sided electrical interface is connected with the connector-sided electrical interface. Note that the connector-side electrical interface will then have corresponding counterparts for the pins, plugs and sockets. For example, such contact pins may be flat (or elongated) contact pins and the contact sockets may be flat (or elongated) contact sockets. These pins or sockets can then be oriented such that expansion planes (or flat surfaces) of the flat contact pins and/or flat contact sockets are at least essentially parallel to the conveying path at the respective end. In this way, a relative movement between the track-sided electrical interface and the connector-sided electrical interface, when connected, is possible along the conveying path (or the respective conveying direction). This also applies to track module and the electrical connector. Thus, possible thermal expansion, in particular along the conveying direction, can be accounted for and be counteracted very easily.

A number of the contact pins and/or plugs and/or contact sockets of the electrical interface (this applies to both, the track-sided electrical interface and the connector-sided electrical interface) can be based on the required power or power and data communication. For example, two pins or sockets can be provided for power and multiple (e.g., four or six) pins or sockets can be provided for data communication. Also, a plug can be used for the data communication. Other types of pins, plugs and sockets can also be used, e.g., pin and basket type connection.

In an embodiment, the track module comprises, at the one or at each of the two ends, a track-sided sealing interface, provided in the bottom part at the bottom side. The track-sided sealing interface is configured to be brought into contact with a connector-sided sealing interface of the electrical connector, in a sealing manner, along the plugging direction. In particular, the track-sided sealing interface surrounds the track-sided electrical interface, and the connector-sided sealing interface surrounds the connector-sided electrical interface. In this way, dust and water are prevented from reaching the electrical interfaces, when connected. This also prevents water and dust from ingressing into the track modules (which typically have internal cavities for the electronics). This in particular allows providing an IP65 type connection between the track module and the electrical connector.

Typically, a seal can be created by means of rubber or similar material (rubber sealing), which is contacted with or pressed onto a counterpart. Thus, either the track-sided sealing interface or the connector-sided sealing interface can comprise such rubber seal. Also, both, the track-sided sealing interface and the connector-sided sealing interface can comprise such rubber sea. Such rubber seal must allow for a certain movement between the track module and the electrical connector, while maintaining the dust and water protection.

Another embodiment relates to an electrical connector, which has already been mentioned. Since such electrical connector is used to electrically connect the track modules with each other, the electrical connector can also be called an electrical distributor as it allows distributing electrical power and/or communication signals between the track modules.

The electrical connector comprises two ends; there is defined a connector extension direction, which extends between the two ends. Note that when such electrical connector is connected to a track module, the extension direction corresponds to or is parallel to the conveying path (or conveying direction) of the track module, at least at the end where the electrical connector is connected. Further, the electrical connector comprises a bottom side and a top side, which opposes the bottom side. Similar to the track module, the bottom side is in particular the side of the bottom part which will be mounted to the base plate. When connected, the bottom sides of the track module and the electrical connector are oriented to the same direction, and so do the top sides.

Furthermore, the electrical connector comprises, at one or at each of the two ends, a connector-sided electrical interface (i.e. an electrical interface of the electrical connector) of a plug-and-socket connection type. The connector-sided electrical interface is configured to be connected with a track-side electrical interface of a track module along a plugging direction, wherein the plugging direction is at least essentially oriented from the bottom side to the top side. Similar as for the track module, the plugging direction is also perpendicular to a surface of the base plate. In particular, a connector-sided electrical interface is provided at each of the two ends, wherein the two connector-sided electrical interfaces are electrically connected with each other inside the electrical connector. This connector-sided electrical interface allows an easy electrical connection of two track modules.

In an embodiment, the connector-sided electrical interface comprises of contact sockets and/or contact plugs and/or contact pins, which are configured such that a relative movement between the track module and the electrical connector, along the extension direction, is allowed, when the connector-sided electrical interface is connected with the track-sided electrical interface. Note that the track-side electrical interface will then have corresponding counterparts for the pins, plugs and sockets, as has already been mentioned earlier. For example, such contact sockets may be flat (or elongated) contact sockets and the contact pins may be flat (or elongated) contact pins. These sockets and pins can then be oriented such that extension planes of the flat contact sockets and/or flat contact pins are at least essentially parallel to the connector extension direction. In this way, a relative movement between the track-sided electrical interface and the connector-sided electrical interface, when connected, is possible along the conveying path (or the respective conveying direction) or along/in the extension direction. This also applies to track module and the electrical connector. Thus, possible thermal expansion, in particular along the conveying direction, can be accounted for and be counteracted very easily.

In an embodiment, the electrical connector comprises, at the one or at each of the two ends, a connector-sided sealing interface, which is configured to be brought into contact with a track-sided sealing interface of the track module, in a sealing manner, along the plugging direction. In particular, the connector-sided sealing interface surrounds the connector-sided electrical interface, and the track-sided sealing interface surrounds the track-sided electrical interface. I this way, dust and water are prevented from reaching the electrical interfaces, when connected. This in particular allows providing an IP65 type connection between the track module and the electrical connector.

Typically, a seal can be created by means of rubber or similar material (rubber seal), which is contacted with or pressed onto a counterpart. Thus, either the track-sided sealing interface or the connector-sided sealing interface can comprise such rubber seal. Also, both, the track-sided sealing interface and the connector-sided sealing interface can comprise such rubber sealing. Such rubber sealing must allow for a certain movement between the track module and the electrical connector, while maintaining the dust and water protection.

In an embodiment, the electrical connector comprises an external connection interface for connection to external power supply, or for connection to both, external power supply and external communication, wherein the external connection interface is electrically connected with the one or at least one of the two connector-sided electrical interfaces inside the electrical connector. This external connection interface allows to connect the entire track system to an external power supply or to both, external power supply and external data communication. For example, the external connection interface can be used to connect to a so-called "Safe Torque Off", STO signal; this is a type of safety signal (for motors). Typically, only one electrical connector with such external connection interface is required for a track system, whereas other electrical connectors do not need to have such further interfaces. Further, an electrical connector having such external connection interface might only have an electrical interface at one end, which would be sufficient to connect an end track module to power supply and data communication. However, an electrical connector having two electrical interfaces and the external connection interface can be used to either connect the track system to power supply and data communication from in-between two adjacent track modules. Also, one of the two electrical interfaces could just not be used.

In an embodiment, the electrical connector comprises a connector body. The connector body comprises different parts, namely end-side body parts (at the two ends of the connector) and a middle body part, which is arranged between the two ends, i.e. between the two end-side body parts. The one or each of the two connector-sided electrical interfaces is provided at an end-side body part The middle body part is higher than the one or each of the two end-side body parts, seen from the bottom side in a direction along the plugging direction. In this way, the middle body part can be arranged between the bottom parts of two adjacent track modules which are connected, so as to allow a gap between the two track modules, e.g., for the connection of the free hanging ends of the rods mentioned earlier.

Another embodiment relates to a track system for a linear motor conveying system. Track system comprises multiple of the track modules as described herein, and one or multiple of the electrical connectors described herein. For one or each of multiple sets of two adjacent of the multiple track modules, which are arranged next to each other along a conveying path, are electrically connected to each other by means of the one or one of the multiple electrical connectors. In addition, a connection to external power supply or to both, external power supply and data communication, can be provided by the one or multiple electrical connectors.

In an embodiment, one or multiple sets of two adjacent track modules and the electrical connector by means of which the two adjacent track modules are electrically connected, are mounted on a base plate. The electrical connector is mechanically contacted to each of the two track modules only via the track-sided and connector-sided electrical interfaces of the plug-and-socket connection type. Note that if the sealing interfaces are provided, there can be established a contact between the electrical connector and track module via the sealing interfaces; this, however, does not correspond to a fixed mechanical connection. There is no other mechanical connection between electrical connector and track module, e.g., via bolts or screws. The track modules and the electrical connector can each be mounted to the base plate via bolts, pins, screws or other fixing or fastening means. In that there is no other mechanical connection than via the electrical interfaces of the plug-and-socket connection type, any slight movement of the track modules and/or electrical connectors, e.g., due to thermal expansion, does not have any particular influence to the connection between the track modules and the electrical connector.

In an embodiment, each of the track modules further comprises two electro-magnetic motor components, each preferably comprising one or more electric coils. A first one of the two electro-magnetic motor components is arranged at the first side part, and a second one of the two electro-magnetic motor components is arranged at the second side part, such that the first electro-magnetic motor component and the second electro-magnetic motor component face each other. Preferably, each track module is configured such that the first electro-magnetic motor component matches with a first counterpart electro-magnetic motor component, preferably comprising one or more permanent magnets, of the carrier module, and that the second electro-magnetic motor component matches with a second counterpart electro-magnetic motor component, preferably comprising one or more permanent magnets, of the same carrier module.

Another embodiment of the invention relates to a linear motor conveying system, comprising the track system as described above, and one or more carrier modules to be received and guided in the multiple track modules, to be guided in the track modules. The one or each of the more carrier modules is received or receivable in the one or each of the more track modules, wherein the one or each of the more carrier modules comprises a carrier component and at least two wheels.

In an embodiment, the linear motor conveying system further comprises a controlling system for controlling the linear motor conveying system to move the one or each of the more carriers within the one or more track modules. This can comprise controlling (and powering) the electro-magnetic motor components, e.g., the coils, of the track modules in an appropriate way.

Such carrier module can comprise a carrier component and at least two wheels, e.g., four or six wheels. The carrier module can be configured to be received between a first side component and a second side component of a track module, like the track module described previously. At least a first one of the wheels and at least a second one of the wheels are arranged at the carrier component opposite to each other, such that the at least one first wheel faces the first side component and the at least one second wheel faces the second side component, when the carrier module is received in the track module.

In an embodiment, the carrier module can further comprise two counterpart electro-magnetic motor components. A first one of the two counterpart electro-magnetic motor components and a second one of the two counterpart electro-magnetic motor components are arranged at the carrier component opposite to each other, such that the first counterpart electro-magnetic motor component faces a first electro-magnetic motor component of the track module and the second counterpart electro-magnetic motor component faces a second electro-magnetic motor component of the track module, when received in the track module.

Another embodiment of the invention relates to a method for setting up a track system as described previously. For each one of the multiple sets of two adjacent of the multiple track modules, the two track modules are connected to each other electrically by means of the electrical connector, and the two track modules and the electrical connector are mounted, and in particular also fixed, to the base plate. Note that no other mechanical connection or fixation between the track modules and the electrical connectors will be made. Further note that each of the two track modules can be part of two of such sets of two adjacent track modules. Further, the track system can be connected to external power supply and/or data communication. Further, carrier modules can be placed in the track system so as to obtain the linear motor conveying system.

Further advantages and embodiments of the invention result from the description and the attached drawing.

It goes without saying that the features mentioned above and those still to be explained below can be used not only in the combination specified in each case, but also in other combinations or on their own, without departing from the scope of the present invention.

The invention is shown schematically in the drawing using an exemplary embodiment and is described in detail below with reference to the drawing.

### Brief description of the drawing

Fig. 1 shows a linear motor conveying system for explaining the invention in a perspective view;
Fig. 2 shows the linear motor conveying system for of Fig. 1 in a different perspective view;
Fig. 3a shows a track module and a carrier module according to an embodiment in a perspective view;
Fig. 3b shows the track module and the carrier module of Fig. 3a in a cross section;
Fig. 3c shows the carrier module of Fig. 3a in a perspective view;
Fig. 4 shows a track system at the transition between two adjacent track modules according to an embodiment;
Fig. 5 shows a track module with an electrical interface according to an embodiment; and
Figs. 6a, 6b show electrical connectors in different embodiments.

### Detailed description of the drawing

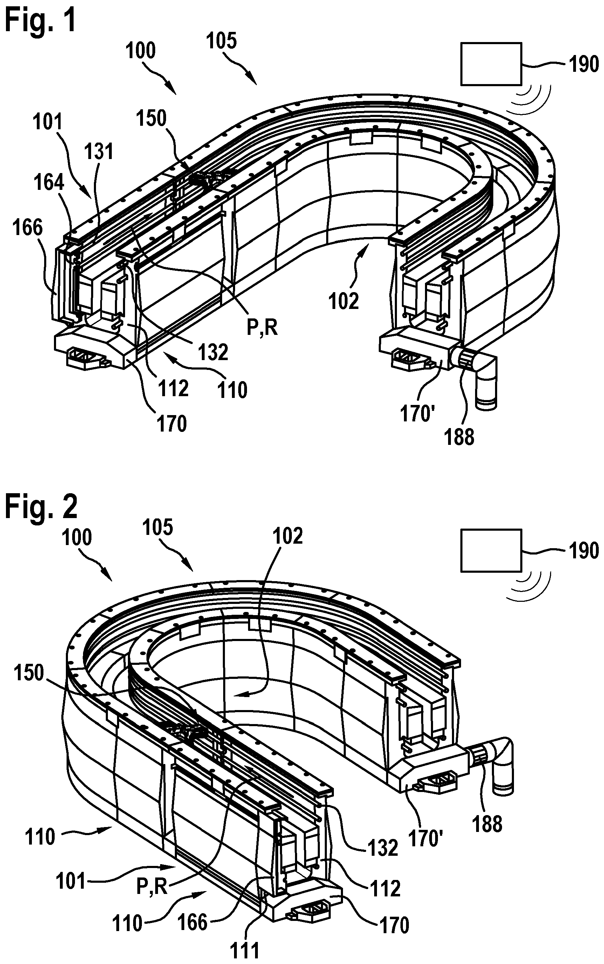

Fig. 1 schematically illustrates a linear motor conveying system 100 in a perspective view. Fig. 2 illustrates the linear motor conveying system 100 of Fig. 1 in a different perspective view. Figs. 1 and 2 will be described together. The linear motor conveying system 100 comprises, by means of example, several track modules. Depending on the needs of a particular application for the linear motor conveying system, different types and numbers of track modules can be provided and also be connected to each other to provide a track system. Types of track modules are, for example, straight modules, curve modules and switch modules.

By means of example, a track module 101 is a straight module, and track module 102 is a curve module. It is noted, that straight modules can have a different length, where a length is to be seen in moving or conveying direction along a conveying path P, indicated for straight module 101 in Figs. 1 and 2.

Different parts or regions of the curve module 102 can have different radii and/or curve shapes. It is noted that the curved track module in Figs. 1 and 2 are only shown schematically, in particular, with regard to the way it is built.

The straight module 101 at the left side in Figs. 1 and 2 will be described in more detail. The track module 101 comprises a track component 110 (a body part), and at least two bearing surfaces 131, 132. By means of example, six bearing surfaces are shown in Figs. 1 and 2, while only two of them are indicated with a reference numeral.

Further, the track component 110 comprises a first side part 111, a second side part 112 and a bottom part (not visible in Figs. 1 and 2), wherein the first side part 111 and the second side part 112 are arranged opposite to each other. Bearing surfaces are formed by guiding structures like rods, arranged in or inserted into recesses in the first side part 111 and the second side part 112. By means of example, guiding structures or bearing surfaces 131 and 132 are referred to by reference numerals.

It is noted that this way of forming a track module, does not only apply to straight module 101 but also to other types of modules.

Each of the track modules shown in Figs. 1 and 2 have a conveying path, although only shown for straight module 101, from a respective first one to a respective second one of two ends of the straight module 101. When the track modules are connected to each other, the individual conveying paths are also connected to from a combined conveying path, along which the carrier modules are guided and conveyed. Note that carrier modules can be conveyed in both directions of a conveying path, irrespective of the direction of the arrow indicating the conveying path P.

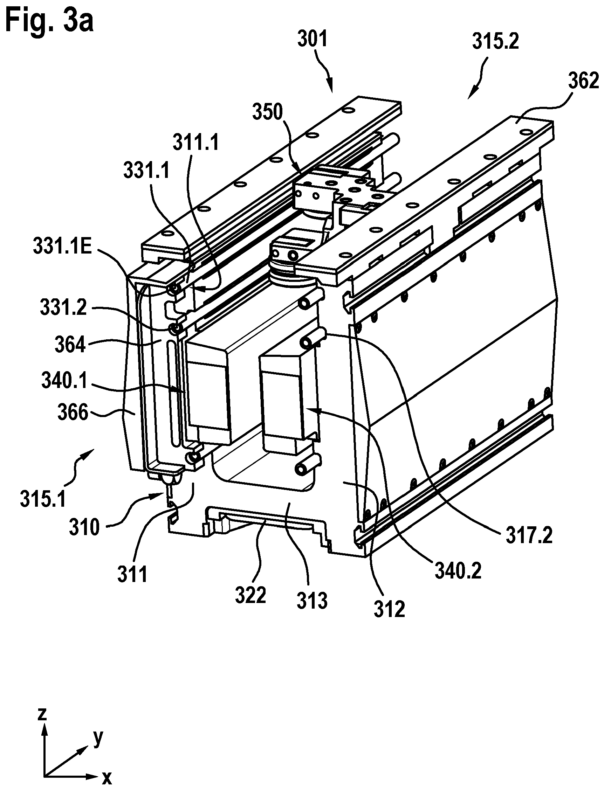

Further, the linear motor conveying system 100 comprises, by means of example, a carrier module 150; however, multiple carrier modules could be provided. The track module 101 is configured to receive a carrier module 150 between the first side part 111 and the second side part 112, in particular, such that the at least one first bearing surface 131 matches with at least a first wheel of the carrier module 150, and that the at least one second bearing surface 132 matches with at least a second wheel of the carrier module 150. This is shown in Figs. 1 and 2 but will be illustrated and described in more detail later with respect to Figs. 3a to 3c.

Further, the linear motor conveying system 100 comprises, in an embodiment, a controlling system 190 for controlling the linear motor conveying system 100 to move the carrier modules 150 within the track modules, i.e., in moving or conveying direction R (along path P), indicated in Figs. 1 and 2. It is noted that such conveying direction R is a straight line for straight modules, but it is a curved line for curved modules. For operating the linear motor conveying system 100, by means of the controlling system 190, electro-magnetic motor components, for example, at the track modules, have to be controlled.

Further, electrical connectors are provided to electrically, or both electrically and communicatively, connect adjacent track modules and to connecting to an external electrical power supply and/or external data communication. Both, the electrical power and the data communication can be used to operate or control the electromagnetic motor components, e.g., via the controlling system 190.

By means of example, two different types or embodiments of electrical connectors are shown in Figs. 1 and 2, an electrical connector 170 for connecting two adjacent track modules, and an electrical connector 170' for connecting two adjacent track modules to an external power supply and/or data communication. Note that a second track module can be connected to each of electricals connectors 170, 170' shown at the lower ends of Figs. 1 and 2.

Electrical connector 170' comprises, compared to electrical connector 170, a further interface 188 for connection to external power supply and/or external communication.

Further, rod connectors 164 are shown, which are used to connect the guiding structures. Further, covers 166 for the rod connectors 164 are shown, which can be provided to protect the connectors and free spaces between the side parts of two adjacent track modules, e.g., from dust.

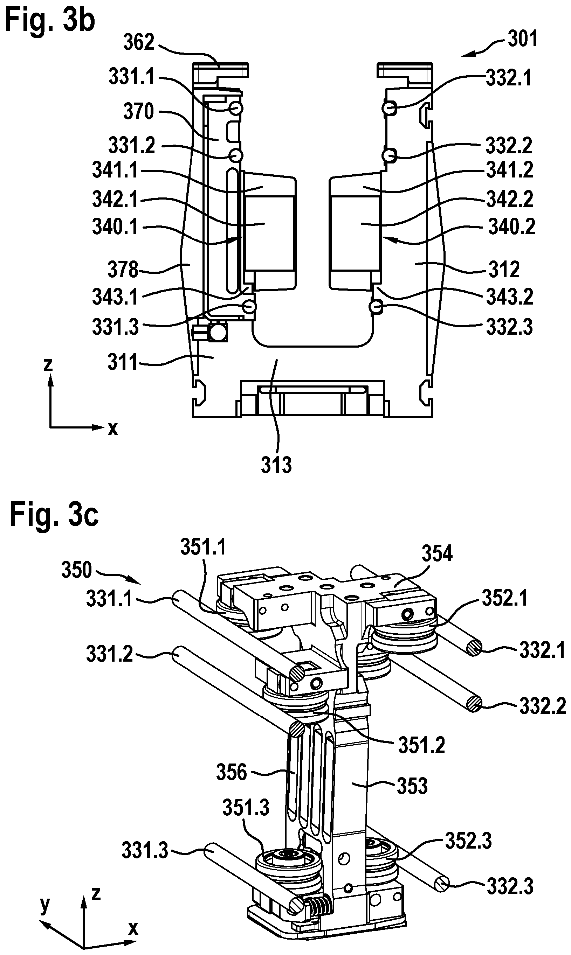

Fig. 3a illustrates a track module 301 and a carrier module 350 in a perspective view. Fig. 3b illustrates the track module 301 of Fig. 3a in a cross section in the x-y-plane, but without the carrier module 350. Fig. 3c illustrates the carrier module 350 of Fig. 3a in a perspective view but without most parts of the track module. Figs. 3a, 3b, 3c shall be described together in the following. It is noted that the axes could also be defined different, e.g., with the conveying direction in the x-direction.

By means of example and for explanation of the basic structure and composition of a track module, track module 301 is a straight module. Track module 301 can, basically, correspond to track module 101 of Figs. 1 and 2, however, showing additional components and, in particular, having specific configurations relating to the guiding structures. The following explanations apply also to other types of track modules.

The track module 301 comprises a track component 310, and, by means of example, six guiding structures, 331.1, 331.2, 331.3, 332.1, 332.2, 332.3, formed as rods, and acting as bearing surfaces. Further, the track component 301 comprises, along a conveying path, a first side part 311, a second side part 312 and a bottom part 313, wherein the first side part 311 and the second side part 313 are arranged opposite to each other. At the bottom part 313, there is provided an electrical wiring 314. The conveying path is not denoted in Fig. 3a, but extends along the y-direction, from first end 315.1 of the track module 301 to a second end 315.2 of the track module, and can be similar or equal to conveying path P shown in Figs. 1 and 2.

Three rods (here, e.g., rods 331.1, 331.2, 331.3) are arranged at the first side part 311, and three second rods (here, e.g., rods 332.1, 332.2, 332.3) are arranged at the second side part 312, such that the at first rods 331.1, 331.2, 331.3 and the second rods 332.1, 332.2, 332.3 - or, rather, the bearing surfaces provided by them - face each other, i.e., are oriented towards each other. In other words, all of the bearing surfaces are provided at an inner side of the respective first and second side parts, where the conveying path is formed.

The guiding structures or rods acting as the bearing surfaces are arranged in or inserted into recesses in the first side part 311 and the second side part 312, respectively. By means of example, one such recess is indicated by 317.2 in Fig. 3a.

Further, as indicated in an in the top left of Fig. 3a, the rod 331.1 is configured with a free hanging end 331.1E at the first end 315.1 such that, within a section along the conveying path said free hanging end extends beyond the track component; also, part of the free hanging end may be within the track component, but not in contact with the track component. A free space 311.1 can be provided between the first side part 311 and the rod 331.1. Although only shown for the rod 331.1 at the first end 315.1, the rod 331.1 can also have a free hanging end at the second end 315.2. Similarly, the rod 332.1 can have a free hanging end at the first end 315.1 and also at the second end 315.2. Further, also the other rods 331.2, 331.3 and 332.2, 332.3 can each have two such free hanging ends. Outside the free hanging ends, i.e. along the major part of the track module, the rods are fixed in the track component (or in the recesses).

In an embodiment, the track 301 further comprises two electro-magnetic motor components, a first electro-magnetic motor component 340.1 and a second electro-magnetic motor component 340.2. The first electro-magnetic motor component 340.1 and the second electro-magnetic motor component 340.2 extend along the conveying path (here: in y-direction). The first electro-magnetic motor component 340.1 is arranged at the first side part 311, and the second electro-magnetic motor component 340.2 is arranged at the second side part 312, such that the first electro-magnetic motor component 340.1 and the second electro-magnetic motor 340.2 component face each other.

In an embodiment, the first electro-magnetic motor component 340.1 comprises one or more electric coils 341.1 (actually covered by epoxy in this Fig. but the reference numeral indicates the general position); the number of the electric coils can vary and depend on the specific system. Further, the first electro-magnetic motor component 340.1 can comprise one or more magnetic or ferromagnetic cores 342.1, e.g., made of iron. Further, the first electro-magnetic motor component 340.1 can comprise a holding or fixing structure 343.1 (only schematically illustrated) for fixing the coils and magnetic core to the first side part 311. The first electro-magnetic motor component 340.1 can be fixed to the first side part 311 by means of gluing and/or screwing, for example.

The explanations for the first electro-magnetic motor component 340.1 apply to the second electro-magnetic motor component 340.2 and its components and the like accordingly.

The bottom part 313 can be mounted on a base plate, what will be described in more detail later. Other possibilities are mentioned previously. Such base plate would be below the bottom part 313, seen in z-direction in Figs. 3a, 3b.

The track module 301 is configured to receive a carrier module 350 between the first side part 311 and the second side part 312 and is, preferably, configured such that the first bearing surfaces provided by rods 332.1, 332.2, 332.3 match with respective first wheels of the carrier module 350, and that the second bearing surfaces provided by rods 332.1, 332.2, 332.3 match with respective second wheels of the carrier module 350.

While Fig. 3ashow the carrier module 350 being received in the track module 301, Fig. 3c shows the carrier module 350 as such. In addition, Fig. 3c shows the six rods 331.1, 331.2, 331.3, 332.1, 332.2, 332.3 acting as the bearing surfaces. The carrier module 350 comprises a carrier component 353 and, by means of example, six wheels, three first wheels 351.1, 351.2, 351.3, and three second wheels 352.1, 352.2, 352.3 (note that wheel 352.2 is only partly visible in Fig. 3c and not explicitly referred to). The carrier module 350 is configured to be received between the first side part 311 and the second side part 312 of the track module 301.

By means of example, three first wheels 351.1, 351.2, 351.3 and the three second wheels 352.1, 352.2, 352.3 are arranged at the carrier component 353 opposite to each other, such that three first wheels 351.1, 351.2, 351.3 face the first side component 311 and the three second wheels 352.1, 352.2, 352.3 face the second side component 312, when received in the track module 301. This can be seen in Figs. 3a, 3b. Each of the wheels 351.1, 351.2, 351.3, 352.1, 352.2, 352.3 matches with a respective one of the six rods 331.1, 331.2, 331.3, 332.1, 332.2, 332.3 or the bearing surfaces provided. This can be seen in Fig. 3c. With respect to the bearing surface and the wheels, matching means that a wheel can be guided by and roll on a respective bearing surface. A bearing surface could, thus, also be called a rolling surface. The wheels, for example, can comprise a groove matching with the bearing surface.

In an embodiment, the carrier module 350 further comprises two counterpart electro-magnetic motor components, a first counterpart electro-magnetic motor component 356 (shown in Fig. 3c) and a second counterpart electro-magnetic motor component (not visible in Fig. 3c). Each of such counterpart electro-magnetic motor component can comprise one or more permanent magnets, for example. The first counterpart electro-magnetic motor component 356 and the second counterpart electro-magnetic motor component 356 are arranged at the carrier component 353 opposite to each other, such that the first counterpart electro-magnetic motor component 356 faces the first electro-magnetic motor component 340.1 of the track module 301 and that the second counterpart electro-magnetic motor component faces the second electro-magnetic motor component 340.2 of the track module 301, when received in the track module 301. This can be seen in Fig. 3a.

The first counterpart electro-magnetic motor component 356 matches with the first electro-magnetic motor component 340.1, i.e., these two components electro-magnetically interact with each other in order to from a linear electro-magnetic motor. This also, typically, requires an air gap of appropriate size between these two components. Similarly, the second counterpart electro-magnetic motor component matches with the second electro-magnetic motor component 340.2, i.e., these two components electro-magnetically interact with each other in order to from a linear electro-magnetic motor. This also, typically, requires an air gap of appropriate size between these two components. Thus, the track module 301 allows receiving a state of levitation of the carrier module 350 between the two side parts of the track module 301.

Figs. 3a and 3b in addition show a rod connector 364, which can be used to connect adjacent rods of two adjacent track modules. For illustration purposes, there is shown only one connector on one side part of the track module and at one end, whereas the other side part and ends are visible without such rod connector. In addition, a cover 366 for the rod connector 364 is shown. Further, a track-sided electrical interface 322 is provide at the bottom part 313 of track module 301. This track-sided electrical interface 322 will be described in more detail later

Note that sensing elements 362 are shown on top of the track module, which however, are not of particular relevance for the present invention.

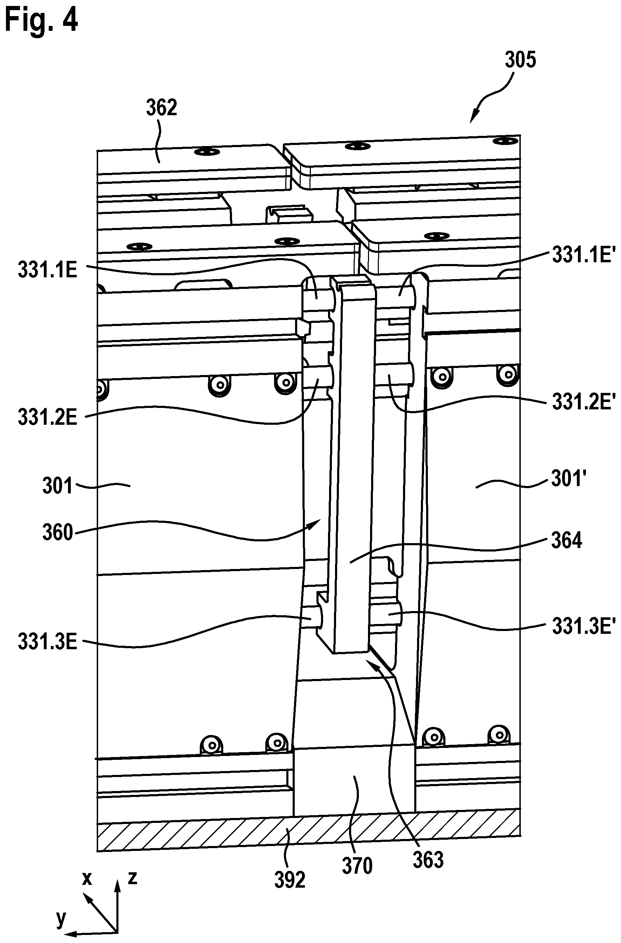

Fig. 4 schematically illustrates a track system 305 according to an embodiment. The track system 305 comprises two track modules 301, 301', which correspond to the track modules shown in Figs. 3a, 3b. A gap 360 between the two track modules is shown. Further, free hanging ends 531.1E, 331.2E and 331.3E of the track module 301, and free hanging ends 331.1E', 331.2E' and 331.3E' of the track module 301' are shown, where the latter three oppose the first three, respectively.

In addition, rod connector 364 is provided, which is used to connect the free hanging ends of the track module 501 and the free hanging ends of the track module 301', respectively. As can be seen, the width of the rod connector 364, along the conveying path (here in y-direction), is smaller than a width of the gap 360. This allows easy assembly and removal of the connector.

Further, an electrical connector 370 is shown, by means of which the track modules 301 and 301' are connected to each other electrically and/or commutatively. There is provided a channel 363 of free space that is formed between the rod connector 364 and the electrical connector 370, connecting an inside of the track modules to the outside. This allows dust and the like be moved to the outside.

The track modules 301 and 301' as well as the electrical connector 370 are mounted or fixed to a base plate 392, e.g. by means of bolts or screws. The track modules 301 and 301' and the electrical connector 370, however, are not (directly) mechanically connected or fixed to each other apart from the connection of the electrical interfaces.

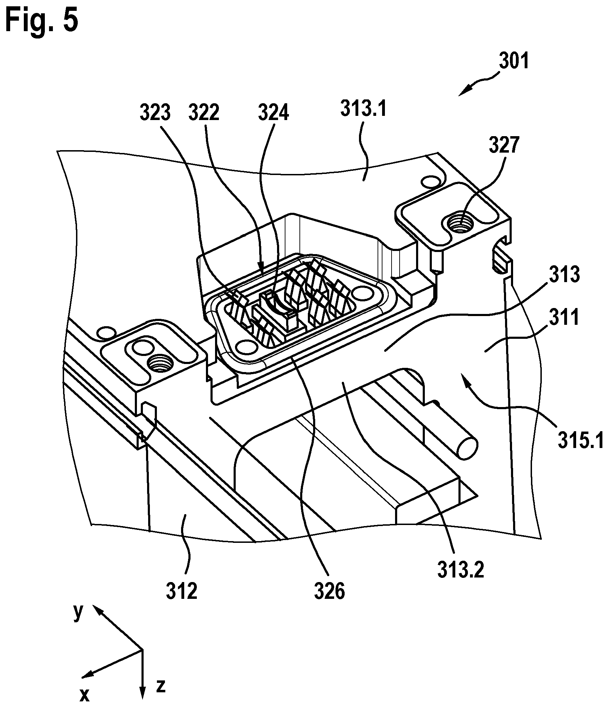

Fig. 5 schematically shows the track modules 301 of Figs. 3a, 3b and 4 in a different view, which can be seen from the coordinate systems provided. In particular, the bottom part 313 at the first end 315.1 is shown, which comprises a bottom side 313.1 and a top side 313.2. Note that due to the view being upside-down, the bottom side 313.1 is shown on the upper side. The bottom side 313.1 is the side with which the track module 301 is to be placed on the base plate, as shown in Fig. 4.

The track module 301 comprises, at the end 315.1, a track-sided electrical interface 322 of a plug-and-socket connection type, provided in the bottom part 313 at the bottom side 313.1. The track-sided electrical interface 322 is configured to be connected with a connector-sided electrical interface of an electrical connector along a plugging direction. The plugging direction is at least essentially oriented from the bottom side 313.1 to the top side 313.2, i.e. along the z-axis or z-direction in the case shown here (or vice versa).

As can be seen in Fig. 5, the track-sided electrical interface 322 is provided in a recess in the bottom part 313 at the bottom side 313.1. Further, the track-sided electrical interface 322 comprises flat contact sockets 323, which are oriented such that expansion planes of the flat contact sockets are at least essentially parallel to the conveying path (which is along the y-axis) at the respective end. Further, the flat contact sockets 323 are basically aligned with the y-z-plane. In addition, the track-sided electrical interface 322 comprises a plug 324. For example, the pins (or tabs) can be used for power connection, and the plug for data communication. As mentioned earlier, other types of plug-and-socket connection can be used, that allow relative movement between the track module and the electrical connector, along the extension/conveying direction, when connected.

Further, the track-sided electrical interface 322 comprises a track-sided sealing interface 326, provided in the bottom part 313 at the bottom side 313.1. The track-sided sealing interface is configured to be brought into contact with a connector-sided sealing interface of the electrical connector, in a sealing manner, along the plugging direction. In particular, the track-sided sealing interface 326 surrounds the track-sided electrical interface 322. In the embodiment shown, the track-sided sealing interface 326 comprises a rubber seal.

Further, the track module 301 comprises, at the bottom part 313 at the bottom side 313.1, mechanical connection means 327, by means of which the track module 301 can be mounted or fixed to the base plate. By means of example, the mechanical connection means 327 comprise thread holes for use with a bolt. Such mechanical connection means 327 can be provide at each corner of the bottom part 313, for example.

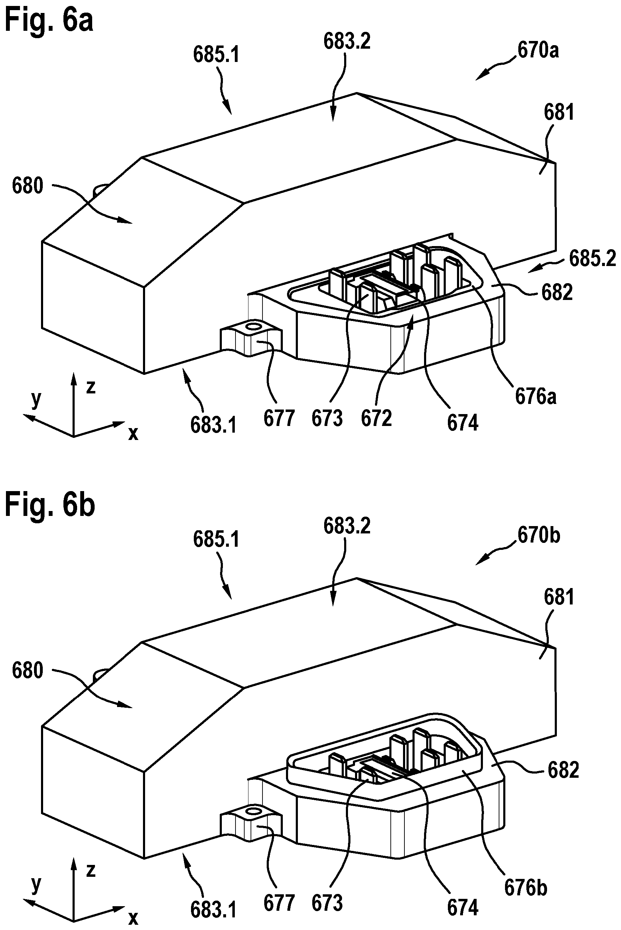

Fig. 6a illustrates an electrical connector 670a in an embodiment. A coordinate system is shown, which aligns with that of Fig. 5 and shall indicate the orientation of the electrical connector 670a when used with a track module.

The electrical connector 670a comprises two ends, a first end 685.1 and a second end 685.1. A connector extension direction extends between the two ends 685.1 and 685.2, which is along the y-axis in the case shown. Note that, when in use, the connector extension direction is aligned with or parallel to the conveying direction at the respective end of the track module. Further, the electrical connector comprises a bottom side 683.1 and a top side 683.2. The bottom side 683.1 is the side with which the electrical connector 670a is to be placed on the base plate, as shown in Fig. 4 (where the electrical connector is indicated with 370).

Further, the electrical connector 670a comprises, at the second end 685.2, a connector-sided electrical interface 672 of a plug-and-socket connection type. The connector-sided electrical interface 672 is configured to be connected with a track-side electrical interface of a track module along the plugging direction, or vice versa, e.g. the track-side electrical interface 322 shown in Fig. 5.

The connector-sided electrical interface 672 comprises flat contact pins 673, which are oriented such that extension planes of the flat contact pins are at least essentially parallel to the connector extension direction (which is along the y-axis). Further, the flat contact pins 673 are basically aligned with the y-z-plane. In addition, the connector-sided electrical interface 672 comprises a socket 674. For example, the flat sockets can be used for power connection, and the socket 674 (for the plug) for data communication. As mentioned earlier, other types of plug-and-socket connection can be used, that allow relative movement between the track module and the electrical connector, along the extension/conveying direction, when connected.

Note that the flat contact pins 673 are, in particular, configured to match with flat contact sockets 323 of track module 301, and the socket 674 is configured to match with plug 324 of track module 301. In this way, an electrical and/or communicative connection can be established, allowing a slight movement along the conveying or connector extension direction (which is along the y-axis), when connected.

Further, the connector-sided electrical interface 372 comprises a connector-sided sealing interface 676a, which is configured to be brought into contact with a track-sided sealing interface of the track module, in a sealing manner, along the plugging direction. In particular, the connector-sided sealing interface 676a surrounds the connector-sided electrical interface 672. In the embodiment shown, the connector-sided electrical interface 676a is a slight recess, which is configured to match with the rubber seal of track-sided sealing interface 326 shown in Fig. 5.

It is noted that electrical connector 670a can comprise another connector-sided electrical interface at the first end 685.1 which is not visible in Fig. 6a.

Further, the electrical connector 670a comprises a connector body 680, wherein the connector-sided electrical interfaces 672 are each provided at a respective end-side body part 682 of the connector body 680. Further, the connector body 680 comprises a middle body part 681 arranged between the two ends 685.1, 685.2, and in particular between the two end-side body parts 682 (seen along the connector extension direction, y-axis). The middle body part 681 extends, along the connection direction (z-axis), from the bottom side 683.1, such that it is higher than the end-side body parts 682. In this way, the end-side body parts 682 can fit into the corresponding recesses at a track module (see Fig. 5), and the middle body part 681 can be arranged between the two track modules to be connected, as can be seen in Fig. 4.

Further, the electrical connector 670a comprises, e.g., at the bottom side 683.1, mechanical connection means 677, by means of which the electrical connector 670a can be mounted or fixed to the base plate. By means of example, the mechanical connection means 677 comprise holes for use with a bolt or similar. Such mechanical connection means 677 can be provided at each corner between the middle body part and an end-side body part.

Fig. 6b illustrates an electrical connector 670b in another embodiment. The electrical connector 670b corresponds to the electrical connector 670a of Fig. 6a, except for the connector-sided sealing interface 676b, which is configured to be brought into contact with a track-sided sealing interface of the track module, in a sealing manner, along the plugging direction. In particular, the connector-sided sealing interface 676b surrounds the connector-sided electrical interface 672. In the embodiment shown, the connector-sided electrical interface 676b is or comprises a rubber seal, which extends from the end-side body part in the plugging direction. This type of connector-sided sealing interface is configured to match with a track-sided sealing interface having a slight recess, similar to that of connector-sided sealing interface 676a shown in Fig. 6a.

In further embodiments, the electrical connector as shown in Figs. 6a or 6b, for example, can comprise an electrical connection interface for connection to external power supply or to both, external power supply and external communication, as shown with further interface 188 of electrical connector 170' in Figs. 1 and 2.

## Claims

1. A track module (301) for a linear motor conveying system (100), wherein the track module comprises a track component (310), a conveying path for a carrier module (350) to be received in the track module, and a bottom part (313),
wherein the track module has two ends (315.1, 315.2) and the conveying path (P) extends between the two ends,
wherein the bottom part (313) comprises a bottom side (313.1) and a top side (313.2), which opposes the bottom side,
wherein the track module comprises, at one or at each of the two ends, a track-sided electrical interface (322) of a plug-and-socket connection type, provided in the bottom part at the bottom side, wherein the track-sided electrical interface (322) is configured to be connected with a connector-sided electrical interface (672) of an electrical connector (670) along a plugging direction, wherein the plugging direction is at least essentially oriented from the bottom side to the top side or vice versa.

2. The track module (301) of claim 1, wherein the track-sided electrical interface (322) is provided in a recess in the bottom part at the bottom side (313).

3. The track module (301) of claim 1 or 2, wherein the track-sided electrical interface comprises (322) contact pins and/or contact plugs and/or contact sockets, which are configured such that a relative movement between the track module and the electrical connector, along the conveying direction, is allowed, when the track-sided electrical interface (322) is connected with the connector-sided electrical interface.

4. The track module (301) of any one of the preceding claims, comprising the track-sided electrical interface (322) at each of the two ends, wherein the two track-sided electrical interfaces have an electrical connection inside the track module.

5. The track module (301) of any one of the preceding claims, further comprising, at the one or at each of the two ends, a track-sided sealing interface (326), provided in the bottom part at the bottom side, wherein the track-sided sealing interface is configured to be brought into contact with a connector-sided sealing interface of the electrical connector, in a sealing manner, along the plugging direction,
wherein, preferably, the track-sided sealing interface surrounds the track-sided electrical interface, and wherein the connector-sided sealing interface surrounds the connector-sided electrical interface.

6. An electrical connector (670) for use with at least one track module (301) for a linear motor conveying system (100),
wherein the electrical connector (670) comprises two ends (685.1, 685.2) and wherein a connector extension direction extends between the two ends,
wherein the electrical connector (670) comprises a bottom side (683.1) and a top side (683.2), which opposes the bottom side,
wherein the electrical connector (670) comprises, at one or at each of the two ends, a connector-sided electrical interface (672) of a plug-and-socket connection type, wherein the connector-sided electrical interface (672) is configured to be connected with a track-side electrical interface (322) of a track module (301) along a plugging direction, wherein the plugging direction is at least essentially oriented from the bottom side to the top side or vice versa.

7. The electrical connector (670) of claim 6, wherein the connector-sided electrical interface comprises contact sockets and/or contact plugs and/or contact pins, which are configured such that a relative movement between the track module and the electrical connector, along the extension direction, is allowed, when the connector-sided electrical interface (322) is connected with the track-sided electrical interface.

8. The electrical connector (670) of claim 6 or 7, comprising the connector-sided electrical interface (672) at each of the two ends, wherein the two connector-sided electrical interfaces have an electrical connection inside the electrical connector.

9. The electrical connector (670) of any one of claims 6 to 8, further comprising, at the one or at each of the two ends, a connector-sided sealing interface (676a, 676b), which is configured to be brought into contact with a track-sided sealing interface of the track module, in a sealing manner, along the plugging direction,
wherein, preferably, the connector-sided sealing interface surrounds the connector-sided electrical interface, and wherein the track-sided sealing interface surrounds the track-sided electrical interface.

10. The electrical connector (170') of any one of claims 6 to 9, further comprising an external connection interface (188) for connection to external power supply or to both, external power supply and external communication, wherein the further interface is electrically connected with the one or at least one of the two connector-sided electrical interfaces inside the electrical connector.

11. The electrical connector (670) of any one of claims 6 to 10, comprising a connector body (680), wherein the one or each of the two connector-sided electrical interfaces are provided at an end-side body part (682) of the connector body, wherein the connector body comprises a middle body part (681) arranged between the two ends, wherein the middle body is higher than the one or each of the two end-side body part, seen from the bottom side in a direction along the plugging direction.

12. A track system (305) for a linear motor conveying system (100), the track system comprising multiple of the track modules of any one of claims 1 to 5, and one or multiple of the electrical connectors of any one of claims 6 to 11,
wherein, for one or each of multiple sets of two adjacent of the multiple track modules, which are arranged next to each other along a conveying path, are electrically connected to each other by means of the one or one of the multiple electrical connectors.

13. The track system (305) of claim 12, wherein the one or at least one of the multiple sets of two adjacent track modules and the electrical connector by means of which the two adjacent track modules are electrically connected, are mounted on a base plate, wherein the electrical connector is mechanically contacted to each of the two track modules only via the track-sided and connector-sided electrical interfaces of the plug-and-socket connection type.

14. A linear motor conveying system (100), comprising the track system of claim 13 or 14, and one or more carrier modules to be guided in the multiple track modules, wherein the one or each of the more carrier modules is received or receivable in the each of the more track modules.

15. A method for setting up the track system (305) of claim 13, wherein, for the one or each of the multiple sets of two adjacent of the multiple track modules:
- the two tack modules are connected to each other electrically by means of the electrical connector, and
- the two track modules and the electrical connector are mounted to the base plate.
